# FASCICULE DE BREVET EUROPEEN

(11) **EP 0 895 570 B1**
(45) Date de publication et mention de la délivrance du brevet: **12.01.2000**
(21) Numéro de dépôt: 97918187.2
(22) Date de dépôt: 09.04.1997
(51) Int. Cl.: F24F 9/00

(54) **GAINE TEXTILE DE VENTILATION ET HOTTE A FLUX LAMINAIRE**
LUFTKANAL MIT TEXTILARTIGER STRUKTUR UND HAUBE MIT LAMINARER STRÖMUNG
FABRIC SHEATH FOR VENTILATION AND LAMINAR FLOW HOOD

(30) Priorité: 25.04.1996 FR 9605234
(43) Date de publication de la demande: 10.02.1999
(73) Titulaire: Ultra Propre Nutrition Industrie Recherche (U.N.I.R.), 75008 Paris (FR)
(72) Inventeur: BEUDON, Didier, F-78120 Rambouillet (FR); ALIX, Guy-Paul, F-29200 Brest (FR)
(74) Mandataire: Warcoin, Jacques
(86) Numéro de dépôt international: FR9700626
(87) Numéro de publication internationale: WO9740325

(56) Documents cités:
- EP-A- 0 282 051
- CA-A- 936 740
- DE-A- 3 909 497
- FR-A- 2 124 780
- GB-A- 2 098 317
- US-A- 3 776 121

## Description

La présente invention concerne de manière générale la protection rapprochée d'un poste de travail situé dans une atmosphère contaminée, et plus particulièrement un dispositif de protection rapprochée de produits sensibles à la contamination par des agents contaminants véhiculés par l'ambiance, lesdits produits étant positionnés sur un plan de travail.

La présente invention est plus particulièrement relative à une gaine pour la protection rapprochée du convoyage de produits sensibles par diffusion d'une veine d'air stérile, notamment selon une direction sensiblement verticale, formée d'une paroi étanche et d'une paroi poreuse s'étendant longitudinalement selon l'axe de la gaine, ladite gaine délimitant un conduit d'alimentation d'air stérile.

L'invention concerne également une hotte à flux laminaire, lavable ou jetable, ainsi qu'un dispositif pour la protection rapprochée d'un plan de travail de grande largeur comportant de telles gaines.

Le problème de la protection de postes de travail contre l'aérocontamination se pose notamment dans l'industrie agro-alimentaire, l'industrie pharmaceutique ou encore dans le milieu hospistalier.

En général, pour répondre à ce type de problème, les postes de travail sont situés dans des salles dites "blanches" dans lesquelles l'air est filtré et traité de sorte que le niveau d'empoussièrement se situe en-dessous d'un seuil admissible contrôlé et soumis à une réglementation sévère.

De plus, l'air qui circule dans ces salles blanches est souvent régulé à une basse température.

Le personnel devant travailler à de tels postes de travail doit être revêtu de tenue spécialisée pénible à enfiler et à porter.

La protection rapprochée de chaque poste de travail individuel est une solution aux inconvénients précités.

Toutefois, cette protection rapprochée doit tenir compte du fait que le personnel travaillant à ces postes de travail doit intervenir manuellement sur les produits sensibles à l'aérocontamination.

De même, il n'est pas souhaitable de prévoir des systèmes mécaniques de protection portes par exemple, car leurs ouvertures et fermetures provoquent des perturbations de flux incompatibles avec le maintien de la stérilité. C'est pourquoi on a déjà décrit un moyen de confinement et de maintien en atmosphère stérile utilisant uniquement des veines d'air.

C'est ainsi que l'on a mis au point des dispositifs de confinement destinés à assurer la protection rapprochée d'un volume particulier à l'aide d'une veine d'air verticale à diffusion lente, ladite veine d'air étant bordée par deux jets d'air plus rapides qui constituent les protections extérieures du volume.

La mise en oeuvre de ce type de protection rapprochée peut être réalisée avec différents modes de réalisation notamment des systèmes de type caisson avec des grilles de diffusion qui permettent de générer les veines d'air avec les vitesses adéquates. Un tel système est décrit dans le document US - A - 3 776 121 ; il comporte une plaque de sortie d'air percée d'ouvertures dont la surface s'accroît du centre vers la périphérie pour générer une veine d'air centrale à diffusion lente, bordée par des veines d'air à diffusion rapide.

Toutefois ces dispositifs assez lourds sont chers mais surtout assez difficiles à nettoyer et peu flexibles lorsqu'il s'agit notamment d'assurer la protection rapprochée d'une chaîne de convoyage au parcours sinueux.

C'est pourquoi, la présente invention propose des dispositifs de protection rapprochée mettant en oeuvre une ou plusieurs gaine(s) textile(s) capable(s) de générer les flux de gaz souhaités. Il est a priori possible de réaliser un tel dispositif à l'aide d'une gaine textile comportant une partie diffusante médiane bordée longitudinalement de chaque côté par deux fentes.

Concrètement, la demanderesse a constaté qu'une telle gaine de périmètre 1,885 m, constituée par exemple d'une partie poreuse médiane correspondant à 25 % du périmètre (soit 0,47 m) bordée de deux fentes de chacune 15 mm de large (soit 0, 016 % du périmètre pour les deux fentes), si elle permet d'obtenir certains résultats intéressants, ne permet toutefois pas d'obtenir des résultats optimum. En effet, les vitesses respectives des veines d'air rapides et lentes ne sont pas constantes le long de la gaine.

Il serait possible d'augmenter le niveau de pression à l'intérieur de la gaine. Cependant, ceci provoquerait une augmentation de vitesse beaucoup trop forte dans les fentes. En fait, les comportements différents du tissu poreux et des fentes longitudinales ne permettent pas d'obtenir un résultat satisfaisant sur une grande longueur.

Enfin, on connaît du document FR - A - 2 124 780 un dispositif comportant un tube diffuseur d'air stérile constitué par un matériau textile poreux, mais un tel dispositif ne permet pas une diffusion médiane d'air stérile à vitesse lente et de part et d'autre une diffusion latérale d'air stérile à vitesse plus élevée.

L'un des objets de la présente invention est de résoudre les problèmes précités et a pour objet une gaine permettant d'assurer la diffusion d'une veine d'air stérile à faible vitesse médiane et à vitesse latérale plus élevée.

De façon générale, on entendra dans ce qui va suivre, par gaine textile, un tuyau présentant une section quelconque et dont une portion importante est réalisée en textile. La gaine selon l'invention peut comporter des parties en matière plastique, notamment des parties semi-rigides.

La présente invention concerne une gaine pour la protection rapprochée du convoyage de produits sensibles par diffusion d'une veine d'air stérile, selon la revendication 1.

De façon préférée, la largeur des veines est au total sensiblement égale au diamètre de la gaine, les jets rapides étant sensiblement tangents aux extrémités du diamètre et dirigés comme les jets lents perpendiculairement audit diamètre.

De préférence, la vitesse de diffusion médiane ou lente est comprise entre 0,2 et 1 m/s et la vitesse des jets latéraux ou rapides est comprise entre 0,5 et 5 m/s pour une pression d'air dans le conduit comprise entre 25 et 1000 Pa.

La paroi poreuse occupe de préférence entre 25 à 50 % du périmètre de la gaine.

De préférence, la paroi externe de la poche de diffusion comporte deux bandes latérales étanches solidaires des bords de ladite paroi étanche et une zone médiane poreuse bordée de deux fentes latérales adjacentes auxdites bandes latérales. Avantageusement, le rapport entre la zone médiane poreuse et une fente est compris entre 10 et 100.

De façon générale, la résistance au passage de l'air de la paroi poreuse est suffisamment élevée pour obtenir une bonne constance longitudinale des vitesses d'air la traversant pour alimenter la poche de diffusion.

L'invention concerne également une gaine textile selon la revendication 6.

Ces jupes peuvent être de longueur égale.

Selon une variante, elles sont de longueur différente. Dans ce cas, l'accès à la zone protégée s'effectue de préférence du côté ayant la jupe la plus courte. Ce type de gaine peut également être utilisé pour constituer un moyen de protection d'un volume limité. En effet, si la gaine ainsi constituée est limitée aux extrémités par un plan perpendiculaire à l'axe de la gaine textile, on obtient ainsi une hotte à flux laminaire classique dont la partie principale est lavable.

L'invention propose également un dispositif pour la protection rapprochée d'un plan de travail de grande largeur, qui comporte au-dessus dudit plan de travail une pluralité de gaines juxtaposées suivant une direction parallèle à la direction du bord transversal dudit plan de travail, chaque gaine étant formée d'une demi-gaine étanche supérieure et d'une demi-gaine poreuse inférieure délimitant un conduit d'alimentation d'air stérile, l'extrémité longitudinale externe, située au niveau d'un bord longitudinal du plan de travail, de la demi-gaine étanche supérieure de chacune des gaines situées aux deux extrémités de la juxtaposition, étant prolongée tangentiellement par une jupe.

Ainsi, le dispositif selon l'invention permet de protéger des surfaces de travail de grande largeur, avec une veine d'air stérile médiane à diffusion lente bordée latéralement par des veines d'air stérile à diffusion plus élevée, la diffusion d'air stérile se faisant selon une direction sensiblement perpendiculaire au plan de travail. Un tel dispositif présente un coût d'implantation beaucoup plus faible, environ six fois plus faible que celui des dispositifs classiques à caisson.

En outre, le dispositif à gaines textiles selon l'invention, peut être avantageusement nettoyé par simple démontage des gaines du fait que l'alimentation en air stérile desdites gaines peut être placée de façon déportée par rapport à celles-ci. Le démontage des gaines n'implique pas alors nécessairement le démontage de l'alimentation. Par contre, le dispositif classique qui comporte un ventilateur d'alimentation d'air surmonté d'un préfiltre et équipé en sortie d'un filtre terminal, est de ce fait indémontable.

De plus, le dispositif à gaines textiles selon l'invention permet de façon tout à fait avantageuse de distribuer au-dessus du plan de travail de l'air stérile à température et hydrométrie régulées.

L'invention est maintenant illustrée par la description qui suit et par les dessins annexés.

La figure 1 est une vue en coupe transversale d'une première variante selon l'invention,

La figure est une vue en coupe transversale d'une seconde variante selon l'invention.

La figure 3 est une vue en coupe transversale d'une troisième variante selon l'invention.

La figure 4 est une vue schématique de côté d'un mode de réalisation d'un dispositif à plusieurs gaines selon l'invention.

La figure 5 est une vue schématique de face du dispositif de la figure 4.

La figure 6 est une vue schématique de face d'une variante de réalisation du dispositif à plusieurs gaines selon l'invention.

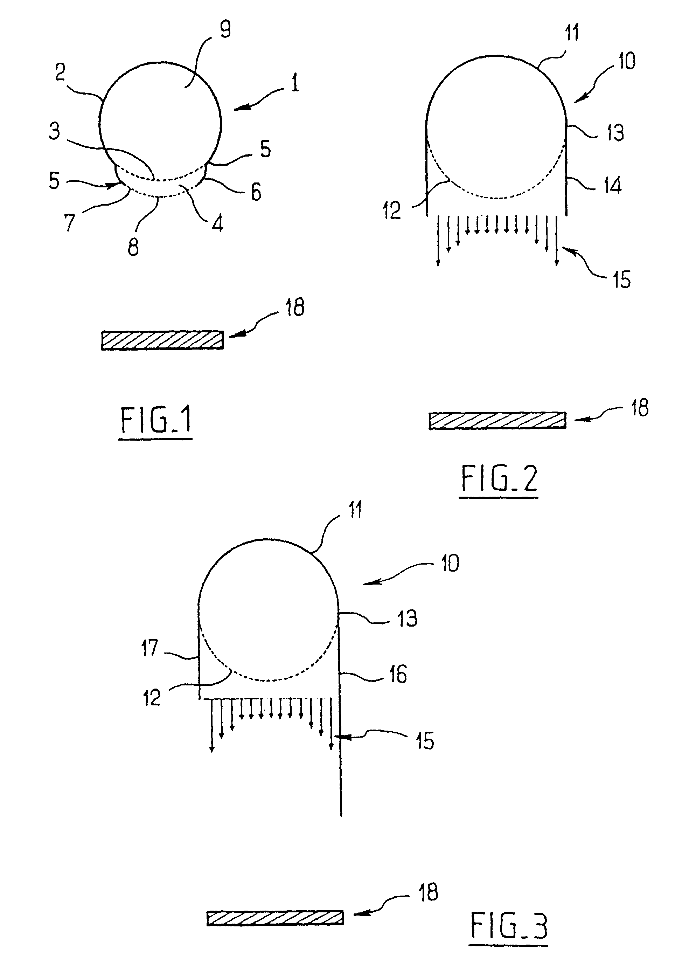

Selon une première variante du dispositif selon l'invention représentée à la figure 1, une gaine textile 1 enfermant un conduit 9 alimenté en air stérile comporte une paroi étanche 2 en textile "étanche ou en film plastique" formant une partie du périmètre et une paroi 3 poreuse par l'intermédiaire de laquelle est alimentée une poche longitudinale de diffusion 4 dont la paroi externe 5 comporte deux bandes latérales 6 solidaires des extrémités longitudinales de la paroi étanche 2 et une zone médiane 8 poreuse bordée de deux fentes latérales 7 adjacentes auxdites bandes latérales 6 étanches. La gaine est située au dessus d'un convoyeur 18.

La poche de diffusion ainsi créée supprime la contrainte de la répartition longitudinale.

Pour une gaine de diamètre 600 mm, soit un périmètre de 1,885 m, la partie 3 poreuse en occupe 25 % soit 0,47 m d'arc de cercle. Les fentes ont une largeur de 5 à 10 mm et la zone médiane 8 poreuse présente une largeur de 300 mm.

Le dispositif ainsi réalisé permet d'assurer une diffusion lente par l'intermédiaire de la zone médiane, cette diffusion étant encadrée par deux jets rapides.

Selon la seconde variante indiquée à la figure 2, une gaine 10 est formée d'une demi-gaine poreuse 12 inférieure. Le périmètre est également de 1,885 m. Les bords longitudinaux 13 de la demi-gaine étanche 11 sont prolongés chacun tangentiellement par une jupe 14, les deux jupes étant de longueur égale.

La demi-circonférence (demi-gaine 12) étant poreuse, le débit en projection verticale conduit au profil des vitesses représenté 15.

Selon la figure 3, la même gaine que la figure 2 est bordée de deux jupes 16 et 17 de longueurs inégales. Ce dispositif limité à chaque extrémité par un plan perpendiculaire (non représenté) à l'axe de la gaine textile, devient une hotte à flux laminaire classique qui peut être lavée ou jetée après usage.

En l'absence de fente, le tissu poreux peut être choisi assez résistant au passage de l'air pour obtenir une bonne répartition longitudinale.

Les jupes peuvent être en tissu en film plastique, lestées chacune par une tige d'inox placée dans un ourlet en partie inférieure (non représentée).

L'échelle des vitesses que permet généralement d'atteindre le dispositif selon l'invention est compris pour la zone médiane (lente) entre 0,2 et 1 m/s et pour les jets rapides entre 0,5 et 5 m/s pour une pression d'air comprise entre 25 et 1000 Pa.

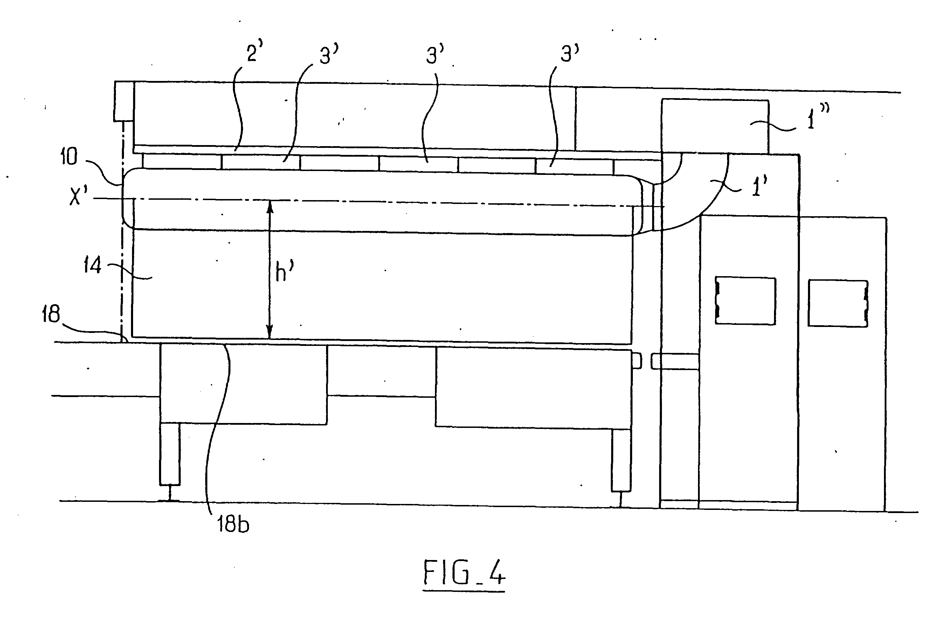

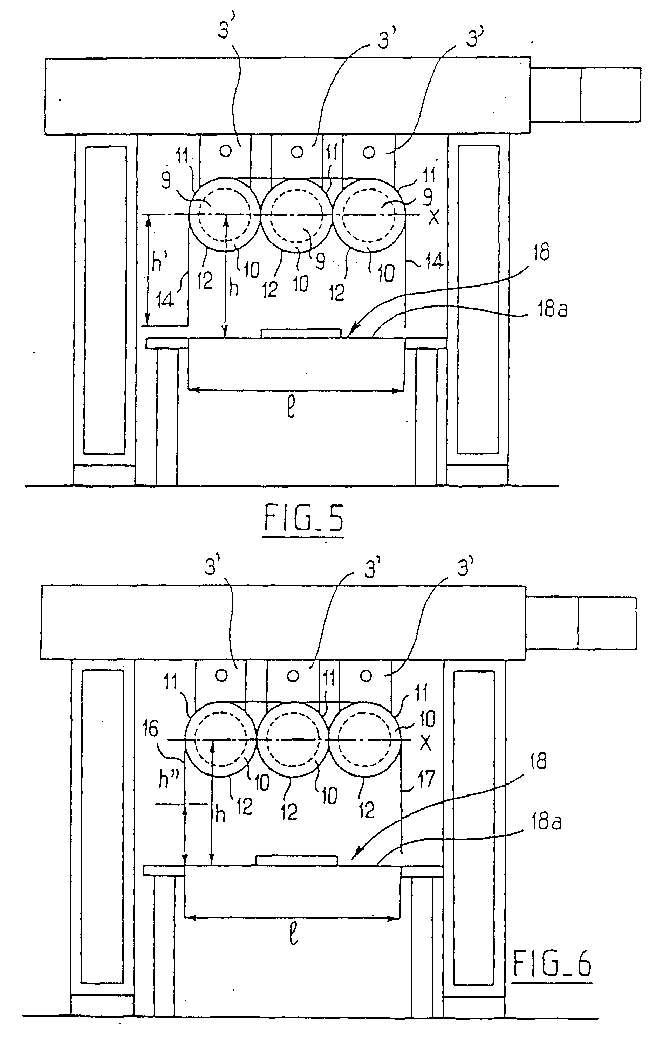

Sur les figures 4 et 5, on a représenté un dispositif pour la protection rapprochée d'un plan de travail 18 de grande largeur.

Ici, la largeur utile 1 du plan de travail 18 est environ égale à 1,20 m.

Ce dispositif comporte au-dessus dudit plan de travail 18, une pluralité de gaines textiles 10 juxtaposées de manière jointive suivant une direction X parallèle à la direction du bord transversal 18a dudit plan de travail 18. Ici pour couvrir toute la largeur utile du plan de travail, on a prévu trois gaines textiles 10.

Bien entendu, pour de plus grandes largeurs, on pourrait prévoir selon le dispositif conforme à la présente invention, de juxtaposer un nombre supérieur à 3 de gaines suivant la direction X parallèle au bord 18a dudit plan de travail.

Chaque gaine 10 est formée d'une demi-gaine étanche supérieure 11 et d'une demi-gaine poreuse inférieure 12 qui délimitent un conduit d'alimentation d'air stérile 9 de forme tubulaire et d'axe longitudinal X'.

Le tissu utilisé pour réaliser la demi-gaine étanche supérieure est par exemple un tissu de fibres polyester qui présente une porosité de 5 à 10 µm d'ouvertures de mailles. Le tissu utilisé pour la demi-gaine poreuse inférieure est par exemple un tissu de fibres polyester qui présente une porosité de 15 à 30 µm d'ouvertures de mailles.

Les gaines 10 s'étendent longitudinalement parallèlement au bord longitudinal 18b dudit plan de travail, sur toute la longueur de celui-ci (ici 3,50m).

Comme on peut le voir sur les figures 4 et 5, l'extrémité longitudinal externe, située au niveau d'un bord longitudinal 18b du plan de travail 18, de la demi-gaine étanche supérieure 11 de chacune des gaines 10 situées aux deux extrémités de la juxtaposition, est prolongée tangentiellement par une jupe 14. Les deux jupes 14 situées à chaque extrémité de la juxtaposition s'étendent sensiblement perpendiculairement au plan de travail 18. Selon le mode de réalisation représenté plus particulièrement sur la figure 5, les deux jupes 14 présentent des longueurs égales, ici la longueur h' desdites jupes 14 correspond sensiblement à la hauteur h, prise perpendiculairement au plan de travail, existante entre le plan de travail 18 et l'axe médian X des gaines 10.

Bien entendu, selon un autre mode de réalisation plus particulièrement représenté sur la figure 6, il peut être prévu que les jupes présentent des longueurs différentes, ici la jupe 16 est plus courte que la jupe 17 et s'étend sur une longueur h" sensiblement égale à 50 % de ladite hauteur h existante entre le plan de travail 18 et l'axe X des gaines 10.

Plus généralement, la longueur des jupes peut être comprise entre 50 % et 100 % de la hauteur existante entre le plan de travail et l'axe médian des gaines.

Ces jupes sont réalisées en matière plastique de préférence transparente pour qu'un opérateur situé sur un côté du dispositif puisse contrôler visuellement ce qui se passe sur le plan de travail.

Le fait qu'une jupe 16 présente une longueur h" inférieure à la hauteur existante entre l'axe médian des gaines et le plan de travail, permet avantageusement à un opérateur d'intervenir manuellement sur le plan de travail 18.

Comme on peut le voir sur les figures 4 à 6, les gaines sont suspendues à des tubes de structure 2' du dispositif par l'intermédiaire de montants de suspension 3', ici trois montants de suspension 3' répartis régulièrement sur toute la longueur des gaines 10. Les gaines 10 sont alimentées par un appareil d'alimentation 1" via des conduits d'alimentation 1' en air stérile, la pression d'air régnant dans chaque conduit 9 de chaque gaine étant comprise entre 25 et 1000 Pa.

Ainsi, le profil des vitesses de l'air stérile issu du dispositif représenté sur les figures 4 à 6, est tel qu'il présente une vitesse médiane de diffusion d'air stérile relativement lente comprise entre 0,2 et 1m/s et une vitesse latérale de diffusion d'air stérile plus élevée comprise entre 0,5 et 5 m/s.

Selon une caractéristique avantageuse du dispositif de protection de plan de travail à grande largeur, il peut être prévu un plafond souple poreux (ici non représenté) tendu juste en dessous des gaines sur toute la largeur du plan de travail. Ceci est particulièrement avantageux pour atténuer les légères augmentations de la vitesse de diffusion d'air à la jonction de deux gaines successives et obtenir dans la partie médiane du plan de travail un profil des vitesses de diffusion plat.

Un tel plafond souple tendu peut être utilisé avantageusement dans un mode de réalisation selon lequel les deux côtés d'extrémité transversaux dudit dispositif sont fermés par des jupes du type de celle située sur les bords longitudinaux des gaines d'extrémité, pour limiter les effets de bords transversaux et réduire les pertes de charge. L'utilisation d'un tel plafond souple poreux tendu en dessous desdites gaines permet de maîtriser au mieux les flux d'air stérile issus de celles-ci.

Plusieurs prélèvements d'air ont été réalisés au-dessus du plan de travail du dispositif représenté sur les figures 4 à 6, à différents endroits dudit plan de travail, pour contrôler la qualité de l'air. Plus particulièrement, des prélèvements d'air ont été réalisés à 50 mm et à 150 mm dudit plan de travail. Un comptage des particules contaminantes ou poussières de diamètre supérieur à 0,5 µm a été effectué, ce qui a permis de vérifier que la qualité de l'air régnant au-dessus dudit plan de travail protégé par un tel dispositif, était bonne puisque cet air comprenait moins de 100 particules de gros diamètre (diamètre>5 µm) par pied cube. Ainsi, la qualité de l'air est de classe 100 selon la norme Américaine FS 209E. Pour comparaison, la mesure particulaire de l'air ambiant du local dans lequel se trouve ledit plan de travail aboutit à une classification de l'air ambiant en Classe 100 000 suivant ladite norme FS 209E avec un nombre supérieur à 1000 de grosses particules contaminantes par pied cube.

## Revendications

1. Gaine textile (1) pour la protection rapprochée du convoyage de produits sensibles par diffusion d'une veine d'air stérile, notamment selon une direction sensiblement verticale, formée d'une paroi étanche supérieure (2) et d'une paroi poreuse inférieure (3) s'étendant selon l'axe X longitudinal de la gaine et délimitant entre elles un conduit (9) d'alimentation d'air stérile, caractérisée en ce qu'elle comporte une poche de diffusion (4) s'étendant longitudinalement, reliée par l'intermédiaire de la paroi poreuse (3) au conduit (9) de la gaine, véhiculant l'air stérile et fermée par une paroi externe (5) poreuse par laquelle diffuse la veine d'air stérile, de manière à assurer une diffusion médiane d'air stérile à vitesse lente et, de part et d'autre, une diffusion latérale d'air stérile à vitesse plus élevée.

2. Gaine selon la revendication 1, caractérisée en ce que la paroi externe (5) de la poche de diffusion (4) comporte deux bandes latérales étanches (6) solidaires des bords de la paroi étanche (2) et une zone médiane (8) poreuse bordée de deux fentes latérales (7) adjacentes auxdites bandes latérales.

3. Gaine selon la revendication 1 ou 2, caractérisée en ce que la résistance au passage de l'air de la paroi poreuse est suffisamment élevée pour obtenir une bonne constance longitudinale des vitesses d'air la traversant.

4. Gaine selon l'une des revendications 1 à 3, caractérisée en ce que la paroi poreuse (3) occupe de 25 % à 50 % du périmètre de la gaine.

5. Gaine selon l'une des revendications 1 à 4, caractérisée en ce que le rapport entre la largeur de la zone médiane poreuse et une fente est compris entre 10 et 100.

6. Gaine textile (10) pour la protection rapprochée du convoyage de produits sensibles par diffusion d'une veine d'air stérile, notamment selon une direction sensiblement verticale, formée d'une paroi étanche supérieure et d'une paroi poreuse inférieure, s'étendant selon l'axe longitudinal de la gaine et délimitant entre elles un conduit d'alimentation d'air stérile, caractérisée en ce qu'elle est formée d'une demi-gaine étanche (11) supérieure et d'une demi-gaine poreuse (12) inférieure assurant une diffusion médiane d'air stérile à vitesse lente, les extrémités (13) longitudinales de la demi-gaine étanche (12) étant prolongées chacune tangentiellement par une jupe (14) assurant de part et d'autre de la diffusion médiane d'air stérile à vitesse lente, une diffusion latérale d'air stérile à vitesse plus élevée.

7. Gaine selon la revendication 6, caractérisée en ce que les jupes sont de longueur égale.

8. Gaine selon la revendication 6, caractérisée en ce que les jupes (16, 17) sont de longueur différente.

9. Gaine selon l'une des revendications 1 à 8, caractérisée en ce que la vitesse de diffusion médiane est comprise entre 0,2 et 1 m/s et la vitesse de diffusion latérale est comprise entre 0,5 et 5 m/s pour une pression d'air dans le conduit comprise entre 25 et 1000 Pa.

10. Hotte à flux laminaire, notamment en tissu, caractérisée en ce qu'elle est formée d'une gaine selon l'une des revendications 6 à 8 et en ce qu'elle est fermée aux deux extrémités par un plan perpendiculaire à l'axe de la gaine textile.

11. Dispositif pour la protection rapprochée d'un plan de travail (18) de grande largeur, caractérisé en ce qu'il comporte au-dessus dudit plan de travail (18), une pluralité de gaines (10), juxtaposées suivant une direction parallèle à la direction du bord transversal (18a) dudit plan de travail (18), chaque gaine (10) étant formée d'une demi-gaine étanche supérieure (11) et d'une demi-gaine poreuse inférieure (12) , délimitant un conduit (9) d'alimentation d'air stérile, l'extrémité longitudinale externe (11a), située au niveau d'un bord longitudinal (18b) du plan de travail (18), de la demi-gaine étanche supérieure (11) de chacune des gaines (10) situées aux deux extrémités de la juxtaposition, étant prolongée tangentiellement par une jupe (14).

12. Dispositif selon la revendication 11, caractérisé en ce que les gaines (10) sont jointives.

13. Dispositif selon l'une des revendications 11 ou 12, caractérisé en ce qu'il présente une vitesse médiane lente de diffusion d'air stérile comprise entre 0,2 et 1 m/s et une vitesse latérale rapide de diffusion d'air stérile comprise entre 0,5 et 5 m/s pour une pression d'air dans chaque conduit comprise entre 25 et 1000 Pa.

14. Dispositif selon l'une des revendications 11 à 13, caractérisé en ce que les jupes (14) sont de longueur égale.

15. Dispositif selon l'une des revendications 11 à 13, caractérisé en ce que les jupes (16, 17) sont de longueur différente.

16. Dispositif selon l'une des revendications 14 ou 15, caractérisé en ce que la longueur des jupes (14, 16, 17) est comprise entre 50 % et 100 % de la hauteur existante entre le plan de travail (18) et l'axe médian (X) des gaines (10).

17. Dispositif selon l'une des revendications 11 à 16, caractérisé en ce qu'il est prévu un plafond souple poreux tendu juste en dessous des gaines sur toute la largeur du plan de travail.

## Patentansprüche

1. Textilschlauch (1) für den Feinstschutz während der Beförderung von sensiblen Produkten durch Verteilung eines in weitgehend vertikaler Richtung verlaufenden sterilen Luftstroms, welcher aus einer oberen luftdichten Wand (2) und einer porösen unteren Wand (3), besteht, die in der Längsachse X des Schlauches verläuft, und die miteinander einen Kanal (9) für die Zufuhr steriler Luft bilden,
**dadurch gekennzeichnet, daß**
er eine längs verlaufende Verteilertasche (4) aufweist, welche über die poröse Wand (3) mit dem Kanal (9) des Schlauches verbunden ist und die sterile Luft weiterleitet und durch eine poröse Außenwand (5) verschlossen wird, durch welche der Strom aus steriler Luft so geleitet wird, daß eine zentrale Verteilung steriler Luft mit langsamer Geschwindigkeit und, auf beiden Seiten, eine seitliche Verteilung steriler Luft mit höherer Geschwindigkeit gewährleistet ist.

2. Textilschlauch nach Anspruch 1,
**dadurch gekennzeichnet, daß**
die Außenwand (5) der Verteilertasche (4) zwei luftdichte Seitenstreifen (6) aufweist, die fest mit den Rändern der luftdichten Wand (2) verbunden sind, sowie einen porösen zentralen Bereich (8) enthält, an dem anschließend an die luftdichten Seitenstreifen zwei seitliche Schlitze (7) vorgesehen sind.

3. Textilschlauch nach einem der Ansprüche 1 oder 2,
**dadurch gekennzeichnet, daß**
der Widerstand gegen den Durchtritt von Luft der porösen Wand ausreichend hoch ist, um in Längsrichtung eine gute Konstanz der Geschwindigkeit der sie durchquerenden Luft zu erreichen.

4. Textilschlauch nach einem der Ansprüche 1 bis 3,
**dadurch gekennzeichnet, daß**
die poröse Wand 25% bis 50% des Umfangs des Schlauches einnimmt.

5. Textilschlauch nach einem der Ansprüche 1 bis 4,
**dadurch gekennzeichnet, daß**
das Verhältnis zwischen der Breite des zentralen porösen Bereiches und einem Schlitz zwischen 10 und 100 liegt.

6. Textischlauch (10) für den Feinstschutz während der Beförderung von sensiblen Produkten mittels Verteilung insbesondere in vertikaler Richtung eines sterilen Luftstroms, welcher aus einer oberen luftdichten Wand und einer unteren porösen Wand besteht, welche an der Längsachse des Schlauches liegen und untereinander einen Kanal für die Zufuhr steriler Luft bilden,
**dadurch gekennzeichnet, daß**
er aus einer oberen luftdichten Schlauchhälfte (11) und einer unteren porösen Schlauchhälfte (12) besteht, welche für eine zentrale Verteilung steriler Luft mit Langsamer Geschwindigkeit sorgen, wobei die Längsenden (13) der luftdichten Schlauchhälfte (12) jeweils in tangentialer Richtung durch eine Schürze (14) verlängert werden, welche auf beiden Seiten der zentralen Verteilung der sterilen Luft bei langsamer Geschwindigkeit eine seitliche Verteilung der sterilen Luft mit höherer Geschwindigkeit gewährleistet.

7. Textilschlauch nach Anspruch 6,
**dadurch gekennzeichnet, daß**
die Schürzen die gleiche Länge haben.

8. Textilschlauch nach Anspruch 6,
**dadurch gekennzeichnet, daß**
die Schürzen (16, 17) eine unterschiedliche Länge haben.

9. Textilschlauch nach einem der Ansprüche 1 bis 8,
**dadurch gekennzeichnet, daß**
die mittlere Geschwindigkeit der Verteilung zwischen 0,2 und 1 m/s liegt und die seitliche Geschwindigkeit der Verteilung bei einem in dem Kanal herrschenden Luftdruck von 25 bis 1000 Pa zwischen 0,5 und 5 m/s liegt.

10. Haube mit laminarer Strömung, die insbesondere aus einem Textilgewebe besteht,
**dadurch gekennzeichnet, daß**
sie aus einem Schlauch nach einem der Ansprüche 6 bis 8 besteht, und dadurch, daß sie an beiden Enden durch eine Fläche verschlossen sind, die senkrecht zur Achse dieses Textilschlauches liegt.

11. Vorrichtung für den Feinstschutz einer sehr breiten Arbeitsfläche (18),
**dadurch gekennzeichnet, daß**
sie über dieser Arbeitsfläche (18) eine Vielzahl von Schläuchen (10) aufweist, die in benachbarter Anordnung in einer Richtung parallel zur Richtung der Seitenkante (18a) dieser Arbeitsfläche (18) angeordnet sind, und daß jeder der Schläuche (10) aus einer oberen luftdichten Schlauchhälfte (11) und einer unteren porösen Schlauchhälfte (12) besteht, die zusammen einen Kanal (9) fur die Zufuhr steriler Luft bilden, und daß das äußere Längsende (11a), welches an der Längskante (18b) der Arbeitsfläche (18) liegt, in tangentialer Richtung durch eine Schürze (14) verlängert wird.

12. Vorrichtung nach Anspruch 11,
**dadurch gekennzeichnet, daß**
die Schläuche (10) aneinander anschließen.

13. Vorrichtung nach einem der Ansprüche 11 oder 12,
**dadurch gekennzeichnet, daß**
sie eine mittlere langsame Geschwindigkeit für die Verteilung der sterilen Luft aufweist, die zwischen 0,2 und 1 m/s liegt, sowie ein rasche seitliche Geschwindigkeit der Verteilung steriler Luft gewährleistet, die zwischen 0,5 und 5 m/s bei einem Luftdruck in den einzelnen Leitungen zwischen 25 und 1000 Pa liegt.

14. Vorrichtung nach einem der Ansprüche 11 bis 13,
**dadurch gekennzeichnet, daß**
die Schürzen (14) die gleiche Länge haben.

15. Vorrichtung nach einem der Ansprüche 11 bis 13,
**dadurch gekennzeichnet, daß**
die Schürzen (16, 17) eine unterschiedliche Länge haben.

16. Vorrichtung nach einem der Ansprüche 14 oder 15,
**dadurch gekennzeichnet, daß**
die Länge der Schürzen (14, 16, 17) zwischen 50 % und 100 % des Höhenabstandes beträgt, welcher zwischen der Arbeitsfläche (18) und der zentralen Achse (X) der Schläuche vorgesehen ist.

17. Vorrichtung nach einem der Ansprüche 11 bis 16,
**dadurch gekennzeichnet, daß**
eine porösen elastische Hängedecke vorgesehen ist, die unmittelbar unter den Schläuchen über die gesamte Länge der Arbeitsfläche angeordnet ist.

## Claims

1. Textile sheath (1) for the close protection of the conveyance of sensitive products by the diffusion of a stream of sterile air, especially in an approximately vertical direction, formed by an impermeable upper wall (2) and a porous lower wall (3) extending parallel to the longitudinal axis X of the sheath and defining, between themselves, a sterile-air supply duct (9), characterized in that it comprises a diffusion bag (4) which extends longitudinally, is connected via the porous wall (3) to the duct (9) of the sheath, conveying the sterile air, and is closed by a porous external wall (5) through which the stream of sterile air diffuses, so as to provide a central diffusion of slow-velocity sterile air and, on either side of it, a lateral diffusion of higher-velocity sterile air.

2. Sheath according to Claim 1, characterized in that the external wall (5) of the diffusion bag (4) comprises two impermeable lateral strips (6) fastened to the edges of the impermeable wall (2) and a porous central region (8) bordered by two lateral slots (7) adjacent to the said lateral strips.

3. Sheath according to Claim 1 or 2, characterized in that the resistance to the passage of air of the porous wall is sufficiently high to obtain good longitudinal constancy of the velocities of the air passing through it.

4. Sheath according to one of Claims 1 .to 3, characterized in that the porous wall (3) occupies from 25% to 50% of the perimeter of the sheath.

5. Sheath according to one of Claims 1 to 4, characterized in that the ratio of the width of the porous central region to a slot is between 10 and 100.

6. Textile sheath (10) for the close protection of the conveyance of sensitive products by the diffusion of a stream of sterile air, especially in an approximately vertical direction, formed by an impermeable upper wall and a porous lower wall, extending parallel to the longitudinal axis of the sheath and defining, between themselves, a sterile-air supply duct, characterized in that it is formed by an impermeable upper half-sheath (11) and a porous lower half-sheath (12) providing a central diffusion of slow-velocity sterile air, the longitudinal extremities (13) of the impermeable half-sheath (12) each being extended tangentially by a skirt (14) providing, on either side of the central diffusion of slow-velocity sterile air, a lateral diffusion of higher-velocity sterile air.

7. Sheath according to Claim 6, characterized in that the skirts are equal in length.

8. Sheath according to Claim 6, characterized in that the skirts (16, 17) differ in length.

9. Sheath according to one of Claims 1 to 8, characterized in that the central diffusion velocity is between 0.2 and 1 m/s and the lateral diffusion velocity is between 0.5 and 5 m/s for an air pressure in the duct of between 25 and 1000 Pa.

10. Laminar-flow hood, especially made of fabric, characterized in that it is formed by a sheath according to one of Claims 6 to 8 and in that it is closed at the two ends by a plane perpendicular to the axis of the textile sheath.

11. Device for the close protection of a wide work surface (18), characterized in that it comprises, above the said work surface (18), a plurality of sheaths (10) juxtaposed in a direction parallel to the direction of the transverse edge (18a) of the said work surface (18), each sheath (10) being formed by an impermeable upper half-sheath (11) and a porous lower half-sheath (12), defining a sterile-air supply duct (9), the external longitudinal extremity (11a), located level with a longitudinal edge (18b) of the work surface (18), of the impermeable upper half-sheath (11) of each of the sheaths (10), which are located at the two ends of the juxtaposition, being extended tangentially by a skirt (14) .

12. Device according to Claim 11, characterized in that the sheaths (10) are contiguous.

13. Device according to either of Claims 11 and 12, characterized in that it has a slow central sterile-air diffusion velocity of between 0.2 and 1 m/s and a rapid lateral sterile-air diffusion velocity of between 0.5 and 5 m/s for an air pressure in each duct of between 25 and 1000 Pa.

14. Device according to one of Claims 11 to 13, characterized in that the skirts (14) are equal in length.

15. Device according to one of Claims 11 to 13, characterized in that the skirts (16, 17) differ in length.

16. Device according to either of Claims 14 and 15, characterized in that the length of the skirts (14, 16, 17) is between 50% and 100% of the height between the work surface (18) and the central axis (X) of the sheaths (10).

17. Device according to one of Claims 11 to 16, characterized in that a taut porous flexible ceiling is provided just beneath the sheaths over the entire width of the work surface.
